# FASCICULE DE BREVET EUROPEEN

(11) **EP 1 963 156 B1**
(45) Date de publication et mention de la délivrance du brevet: **06.11.2013**
(21) Numéro de dépôt: 06841857.3
(22) Date de dépôt: 05.12.2006
(51) Int. Cl.: B60T 13/68, B60T 15/04

(54) **SYSTEME DE FREINAGE A COMMANDE ELECTROPNEUMATIQUE A DEUX ETAGES POUR UN VEHICULE ROUTIER MULTI-ESSIEUX**
BREMSSYSTEM MIT ZWEISTUFIGER ELEKTROPNEUMATISCHER BETÄTIGUNG FÜR EIN STRASSENGEBUNDENES VIELACHSFAHRZEUG
TWO-STAGE ELECTROMECHANICALLY CONTROLLED BRAKING SYSTEM FOR A MULTIAXLE ROAD VEHICLES

(30) Priorité: 06.12.2005 FR 0512372
(43) Date de publication de la demande: 03.09.2008
(73) Titulaire: LOHR INDUSTRIE, 67980 Hangenbieten (FR)
(72) Inventeur: AUDREZET, Arnaud, 67200 Strasbourg (FR); ANDRE, Jean-Luc, F-67120 Molsheim (FR)
(74) Mandataire: Metz, Paul
(86) Numéro de dépôt international: PCT/FR2006/002649
(87) Numéro de publication internationale: WO 2007/065994

(56) Documents cités:
- GB-A- 477 333
- US-A- 2 103 352
- US-A- 2 132 935

## Description

La présente invention se rapporte à un système de freinage à commande électropneumatique à deux étages pour un véhicule routier multi-essieux notamment dans le domaine du transport en commun.

Un tel système est connu du document GB 477 333 A.

Une application particulière concerne une rame multi-essieux sur pneus de transport en commun comportant un ensemble d'autoguidage.

Les véhicules routiers de transport en commun bénéficient en général d'un système de freinage très puissant permettant de les stopper rapidement. Ce système de freinage est classiquement un système de freinage pneumatique à commande pneumatique. Un tel système, disponible sur le marché, est parfaitement fiable et sécuritaire.

Cependant, dans les conditions normales d'exploitation, si le conducteur actionne un peu brutalement un tel système, le véhicule de transport en commun s'arrête aussi brutalement, ce qui peut provoquer un grand inconfort pour les passagers, voire même les déséquilibrer ou les faire chuter.

En effet, un freinage brutal, en plus d'effrayer les passagers, a tendance à projeter ces derniers vers l'avant. Les passagers, n'étant pas attachés à leur siège et étant même souvent debout, peuvent alors heurter un élément structurel du véhicule ou même tomber. Un tel freinage est donc source de nombreux traumatismes pour les passagers, autant psychologiques que corporels.

Pour éviter ces désagréments, le chauffeur doit donc en permanence doser le freinage qu'il commande en anticipant et actionnant très progressivement et délicatement l'organe de commande du freinage, généralement une pédale de frein. Avec le système classique de freinage, il est assez difficile pour le chauffeur d'assurer le confort maximal des passagers par une conduite douce et sans à-coups, celle-ci nécessitant beaucoup d'efforts et d'attention de sa part.

Un des objectifs de l'invention est de fournir un système de freinage adapté aux véhicules de transport en commun, qui assure un freinage progressif et modéré garantissant le confort et la sécurité des passagers. Un tel système progressif est parfaitement envisageable dans ce genre d'application, d'autant plus que les véhicules de transport en commun circulent généralement sur des voies réservées, c'est-à-dire sans contraintes de circulation par rapport aux autres véhicules. Le conducteur sait alors exactement où et quand son véhicule doit s'arrêter et il peut de ce fait anticiper les opérations de ralentissement et de freinage.

Un autre inconvénient du système classique de freinage à commande pneumatique est son temps de réponse important. En effet, dans un véhicule long et notamment dans une rame de transport en commun à plusieurs voitures et donc à plusieurs essieux, la propagation de la commande pneumatique le long de tout le véhicule prend un certain temps.

Si les organes de freinage situés sur les premiers essieux entrent en action peu de temps après que la consigne de freinage ait été donnée par le chauffeur, ceux situés à l'autre bout du véhicule sont actionnés avec un retard assez important. Une telle situation diminue l'efficacité du freinage résultant, génère une usure non homogène des organes de freinage et induit un comportement dynamique non satisfaisant du véhicule.

Un autre objectif de l'invention est de fournir un système de freinage parfaitement efficace, qui présente un temps de réponse beaucoup plus court et qui génère une usure plus limitée et mieux répartie des organes de freinage. Grâce à un tel système, le comportement dynamique du véhicule est optimisé pour assurer au mieux le confort et la sécurité des passagers.

En cas de danger imprévu, la nécessité d'un freinage d'urgence reste cependant indispensable. En effet, même si les véhicules de transport en commun circulent généralement sur des voies réservées, il peut arriver qu'un piéton, un véhicule ou tout autre obstacle imprévu, présent momentanément sur la voie impose un freinage d'urgence.

Un tel freinage d'urgence doit être parfaitement fiable et doit permettre de stopper le véhicule sur une distance très courte sans apporter une trop grande gêne aux passagers.

Le freinage pneumatique à commande pneumatique est parfaitement fiable et sécuritaire. Le système de freinage selon l'invention conserve ce type de freinage pour réaliser le freinage d'urgence, tout en palliant ses inconvénients. Il permet ainsi de diminuer son temps de réponse et assure une parfaite efficacité du freinage résultant.

Il existe donc pour les véhicules routiers multi-essieux un besoin pour un système de freinage pneumatique qui permette à la fois un freinage de service progressif et modéré, et un freinage d'urgence fiable et efficace, tout en assurant le confort et la sécurité des passagers.

Pour résoudre ce problème technique l'invention fournit un système de freinage à commande électropneumatique pour véhicule routier multi-essieux, comportant pour chaque essieu un module de freinage pneumatique relié à un réservoir d'alimentation en gaz d'actionnement des freins et comprenant des organes actionneurs de frein.

Ce système de freinage comprend :
- un organe manuel, préférentiellement un pédale de frein, à deux étages de fonctionnement correspondant à un régime de service et à un régime de freinage d'urgence, actionné par le conducteur du véhicule pour initier la procédure de freinage et dont la position détermine l'intensité du freinage demandé ;
- une électrovanne proportionnelle EVP pour chaque module de freinage, recevant lorsque l'organe manuel est actionné une commande électrique et/ou une commande pneumatique de freinage, et dont l'ouverture, proportionnelle à la ou aux commande(s) reçue(s), met en communication les organes actionneurs de frein avec le réservoir d'alimentation de manière à générer l'effort de freinage demandé ;
- au moins une unité de commande de la décélération UCD recevant une information sur la position de l'organe manuel et générant à partir de cette position, lorsque l'organe manuel est actionné, une commande électrique de freinage destinée à piloter électriquement l'ouverture des électrovannes EVP ;
- une ligne de commande électrique pour chaque module de freinage, formant une liaison électrique entre l'unité UCD et chacune des électrovannes EVP et permettant la transmission de la commande électrique ;
- une ligne de commande pneumatique formant une liaison pneumatique entre l'organe manuel et les électrovannes EVP et permettant la transmission d'une commande pneumatique générée par l'organe manuel, uniquement en régime de freinage d'urgence.

Avantageusement, l'unité UCD peut également piloter le freinage électrodynamique par les moteurs du véhicule, également appelé frein moteur, l'unité UCD privilégiant préférentiellement le frein moteur, éventuellement en le complétant ou en le remplaçant par le freinage pneumatique s'il est insuffisant ou inefficace.

D'autres caractéristiques et avantages de l'invention apparaîtront dans la description qui suit, donnée à titre d'exemple et accompagnée des dessins suivants :
- la figure 1 est un schéma fonctionnel simplifié du module de base du système de freinage selon l'invention ;
- la figure 2 est un schéma général fonctionnel d'un exemple de système de freinage selon l'invention comportant plusieurs modules de freinage ;
- la figure 3 est un schéma général fonctionnel d'un autre exemple de système de freinage selon l'invention à trois modules de freinage et une pédale de frein à chaque extrémité du véhicule ;
- la figure 4 est un schéma électropneumatique plus complet correspondant à un autre exemple de système de freinage selon l'invention à quatre modules de freinage et à deux unités de commande de la décélération ;
- la figure 5 est une vue schématique de la pédale de frein ;
- la figure 6 est un graphique illustrant la forme de la commande au niveau de la pédale de frein ;
- la figure 7 est un schéma-bloc d'une unité de commande de la décélération et de son environnement ;
- la figure 8 est un schéma général fonctionnel d'un exemple de module de base du système de freinage selon l'invention, équipé d'un dispositif supplémentaire de sécurité de type inhibiteur de sortie de l'UCD.

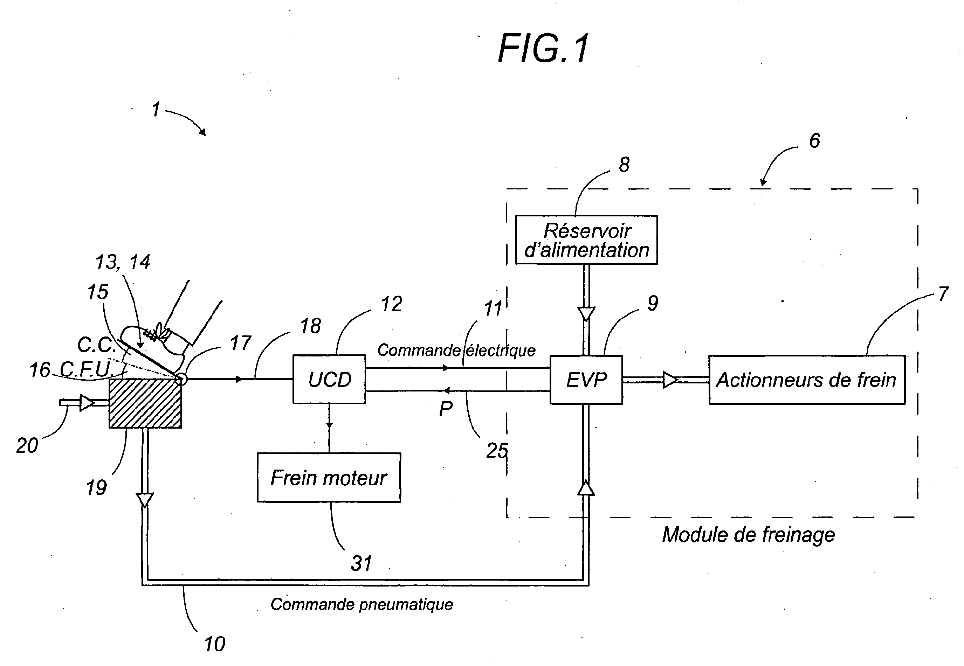

Le système de freinage selon la présente invention va maintenant être décrit de façon détaillée en référence aux figures 1 à 8. Les éléments équivalents représentés sur les différentes figures porteront les mêmes références numériques.

La présente invention se rapporte à un système de freinage à commande électropneumatique prévu pour un véhicule routier articulé multi-essieux notamment pour le transport de personnes. Il est bien entendu que cette application ne constitue qu'un exemple et que bien d'autres applications en véhicules terrestres multi-essieux sont possibles.

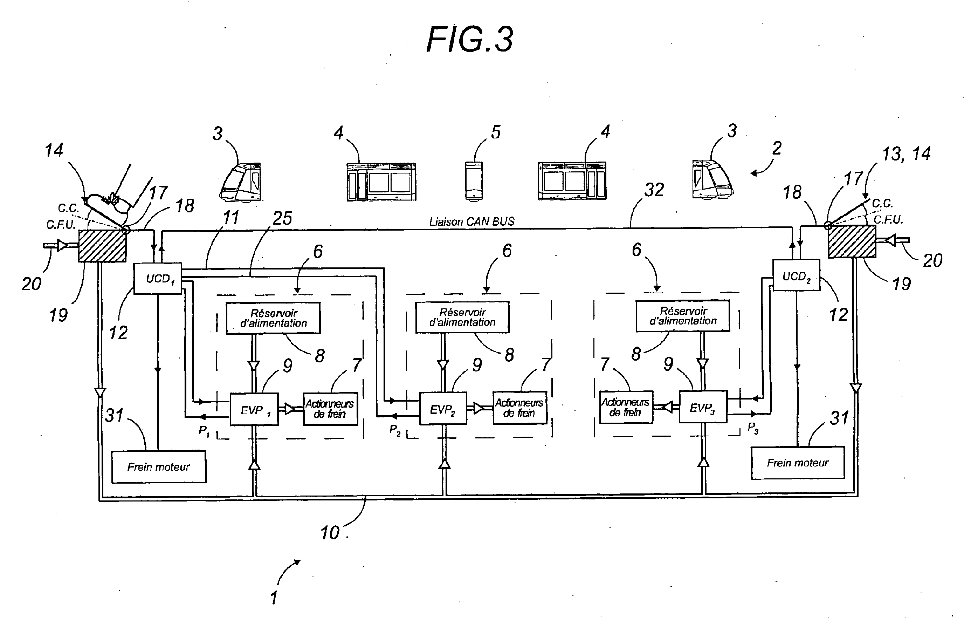

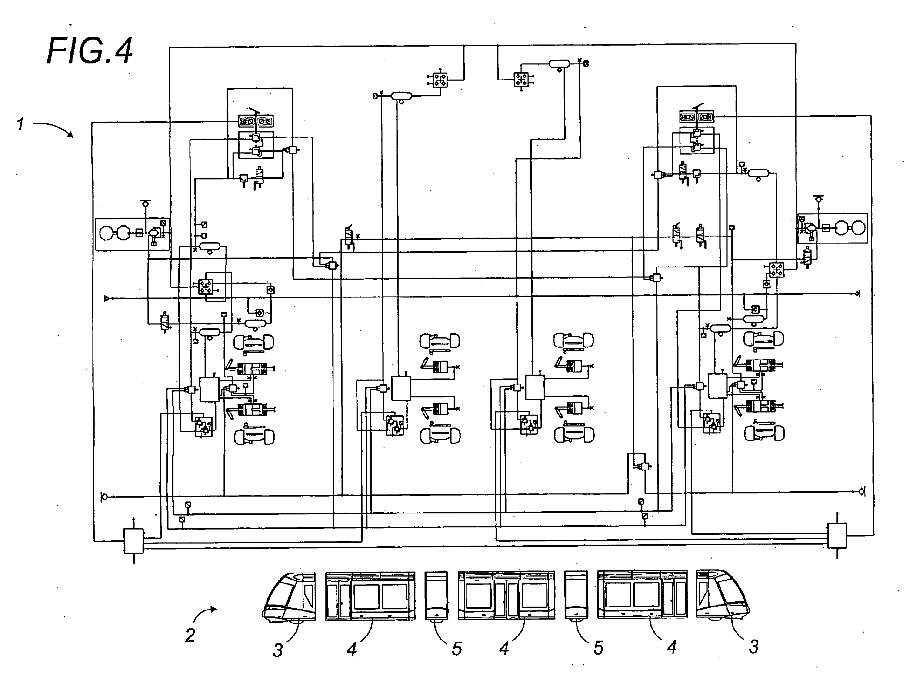

En se référant aux figures 3 et 4, le système de freinage 1 selon l'invention est destiné plus particulièrement à être mis en place sur une rame 2 préférentiellement routière et multi-essieux de transport en commun. Cette rame 2 est formée d'une pluralité de modules routiers articulés entre eux, dont au moins un module de tête 3, une ou plusieurs voitures 4 destinées au transport des passagers et portées par des modules intermédiaires tels que 5 comportant chacun un essieu.

Classiquement, la rame 2 comporte de préférence un module de tête 3 à chacune de ses extrémités, lui permettant de rouler alternativement dans les deux sens sans avoir à faire demi-tour.

Selon l'invention, chaque essieu est équipé d'un module ou ensemble de freinage pneumatique 6.

Chaque module de freinage 6 comprend un ensemble de dispositifs classiques de freinage pneumatique agissant sur des disques ou autres surfaces solidaires des roues. Ces dispositifs comprennent des actionneurs pneumatiques de frein 7 et agissent unitairement sur chacune des deux roues d'un essieu à partir d'une énergie pneumatique motrice provenant d'une réserve dé gaz d'actionnement des freins, également appelée réservoir d'alimentation 8, ce gaz d'actionnement étant préférentiellement de l'air comprimé.

De préférence, chaque module de freinage 6 est relié à un réservoir 8, indépendant, d'alimentation en gaz d'actionnement des freins, préférentiellement disposé sur le toit de la voiture 4 voisine. Chaque module de freinage 6 est ainsi indépendant des autres en ce qui concerne son énergie pneumatique, ce qui permet avantageusement d'isoler un module en cas de fuite ou de défaillance.

Cependant, on peut parfaitement envisager d'utiliser un réservoir d'alimentation commun pour l'ensemble des modules de freinage 6 ou plusieurs réservoirs répartis sur la rame 2 et alimentant chacun un ou plusieurs modules de freinage 6.

Ces réservoirs 8 sont préférentiellement remplis avec de l'air comprimé provenant d'un générateur commun ou non.

De préférence, un ou plusieurs de ces modules de freinage 6 comporte(nt) en outre des organes de sécurité connus tels que par exemple un système d'anti-patinage, d'anti-blocage des roues, de symétrie entre les roues, de compensation en charge modulant la force de freinage selon le poids de l'essieu, ou tout autre système approprié. Ces organes de sécurité sont préférentiellement regroupés dans une unité de contrôle et de stabilisation du freinage qui de préférence fait partie des organes 7 actionnant les dispositifs de freinage pour chaque essieu à partir du réservoir d'air comprimé 8 et d'une commande de freinage.

Selon une caractéristique essentielle de l'invention, chacun de ces modules de freinage 6 comporte en outre une électrovanne proportionnelle 9 EVP. Lorsqu'il existe plusieurs électrovannes proportionnelles (et donc plusieurs modules de freinage 6), elles sont référencées EVP₁, EVP₂,..., EVPₙ.

Chaque électrovanne proportionnelle 9 de chaque module de freinage 6 porté par chacun des essieux est alimentée directement en air comprimé à partir du réservoir d'alimentation 8 correspondant et commande pneumatiquement les actionneurs de frein 7, de préférence à travers l'unité de contrôle et de stabilisation du freinage correspondante, en vue de réaliser le freinage.

Comme on le verra ci-après, celui-ci est décomposé en freinage de service et freinage d'urgence.

L'ouverture de l'électrovanne proportionnelle 9, dont dépend l'intensité du freinage résultant, est fonction de la commande de freinage reçue par l'électrovanne proportionnelle 9.

Selon l'invention, chaque électrovanne proportionnelle 9 peut recevoir deux types de commande de freinage : une commande pneumatique formée de variations de pression pneumatique provenant d'une ligne de commande pneumatique 10 classique de l'ensemble de freinage pneumatique utilisé, et une commande électrique par une ligne de commande électrique 11 provenant d'une unité de commande de la décélération UCD 12.

Pour initier la procédure de freinage, le système de freinage 1 selon l'invention comporte un organe manuel 13 situé dans le poste de conduite, devant être actionné par le chauffeur pour produire la ou les commandes de freinage.

Selon l'exemple représenté, cet organe manuel 13 est de préférence une pédale de frein 14 destinée à être actionnée par le conducteur et dont la position commande le freinage.

Cette pédale de frein 14 est particulière, car elle comporte deux étages de fonctionnement correspondant à deux régimes de freinage. Le premier régime est celui du ralentissement-freinage, appelé freinage de service et adapté à une utilisation normale de transport en commun. Il correspond par exemple au premier secteur angulaire 15 d'enfoncement de la pédale 14, appelé course de confort CC.

Le deuxième régime est celui du freinage d'urgence et correspond par exemple au deuxième secteur angulaire 16 d'enfoncement de la pédale 14, appelé course de freinage d'urgence CFU.

La pédale de frein 14 peut être remplacée par un organe manuel 13 différent, par exemple à main, un actionneur quelconque, un ou plusieurs capteurs de position ou tout autre moyen approprié.

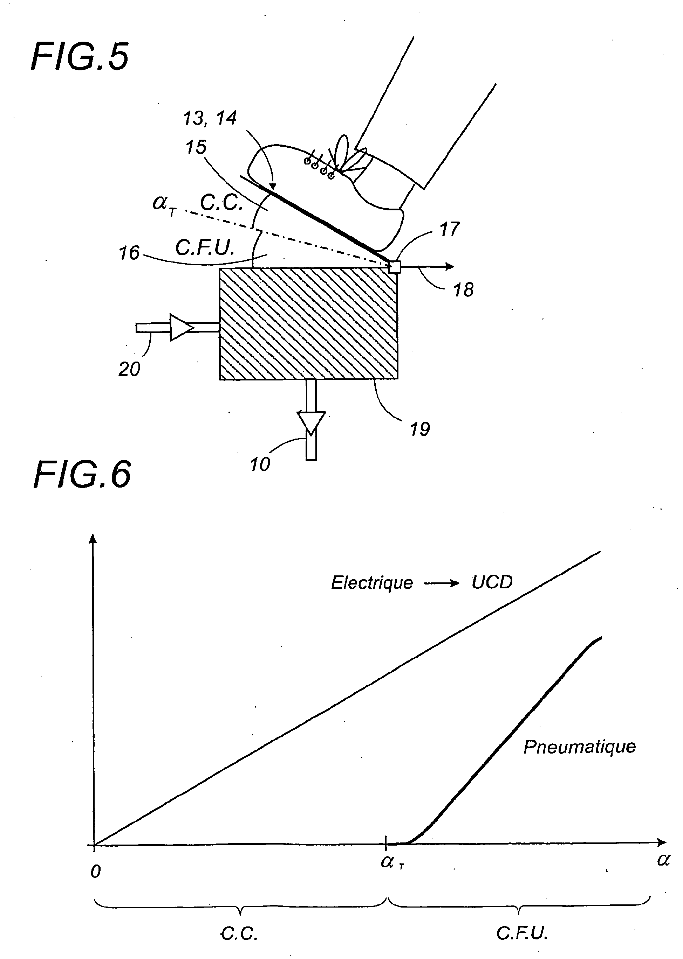

Avantageusement, lorsque l'organe manuel 13 est une pédale 14 telle que représentée sur la figure 5, le conducteur peut passer très facilement et avec le même mouvement d'un régime de freinage à l'autre, simplement en enfonçant davantage la pédale.

Les deux étages de fonctionnement de la pédale peuvent avantageusement être indiqués au conducteur par une différence de raideur de la pédale, un « point dur » indiquant préférentiellement la zone de transition entre les deux secteurs et donc entre les deux régimes de freinage. Cette indication peut éventuellement être complétée par tout autre moyen de signalisation approprié, tel que par exemple par un affichage sur le tableau de bord ou par un signal sonore ou visuel.

La pédale de frein 14 est un actionneur mécanique qui comprend un étage électrique et un étage pneumatique de naissance et de transmission de la commande correspondant aux deux régimes de freinage.

Sur la première partie de la course de la pédale 14, correspondant au premier secteur angulaire 15, la ligne de commande pneumatique 10 n'est pas alimentée.

La position de l'organe manuel 13, préférentiellement la pédale 14, est détectée par un ou plusieurs capteurs de position 17, de préférence des capteurs électroniques de position angulaire ou d'une grandeur fonction de cette position angulaire. Les informations résultantes relatives à cette position sont transmises à l'unité UCD 12 au moyen d'une liaison électrique 18.

Sur la deuxième partie de la course, qui correspond au deuxième secteur angulaire 16, un boîtier pneumatique 19 est activé proportionnellement à l'enfoncement de la pédale 14, ce qui génère une commande pneumatique, réalisée à partir d'air comprimé provenant d'une conduite alimentation 20 et envoyée sur la ligne de commande pneumatique 10 vers les modules de freinage 6 et leurs électrovannes proportionnelles 9. L'effort de freinage appliqué aux roues par les actionneurs de frein 7 sera alors proportionnel à cette commande pneumatique.

Comme on peut le voir sur le graphique de la figure 6, pendant la course de confort CC correspondant au premier secteur angulaire 15, seule une information électrique traduisant l'enfoncement de la pédale est envoyée vers l'unité UCD 12.

A partir de l'angle τ, on passe dans le deuxième secteur angulaire 16 et donc dans le régime de freinage d'urgence. Une commande pneumatique, transmise par la ligne de commande pneumatique 10 aux électrovannes proportionnelles 9, se superpose alors à l'information électrique précédente destinée à l'unité UCD 12.

La valeur τ est une valeur angulaire quelconque adaptée à l'application considérée et peut par exemple être de l'ordre de 10°.

L'unité de commande de la décélération UCD 12 est un calculateur qui pilote les électrovannes proportionnelles EVP 9 en fonction de l'information électrique sur la position de la pédale 14 reçue des capteurs de position 17.

Selon un mode de réalisation préféré de l'invention, elle présente en outre plusieurs autres fonctions de régulation particulièrement avantageuses.

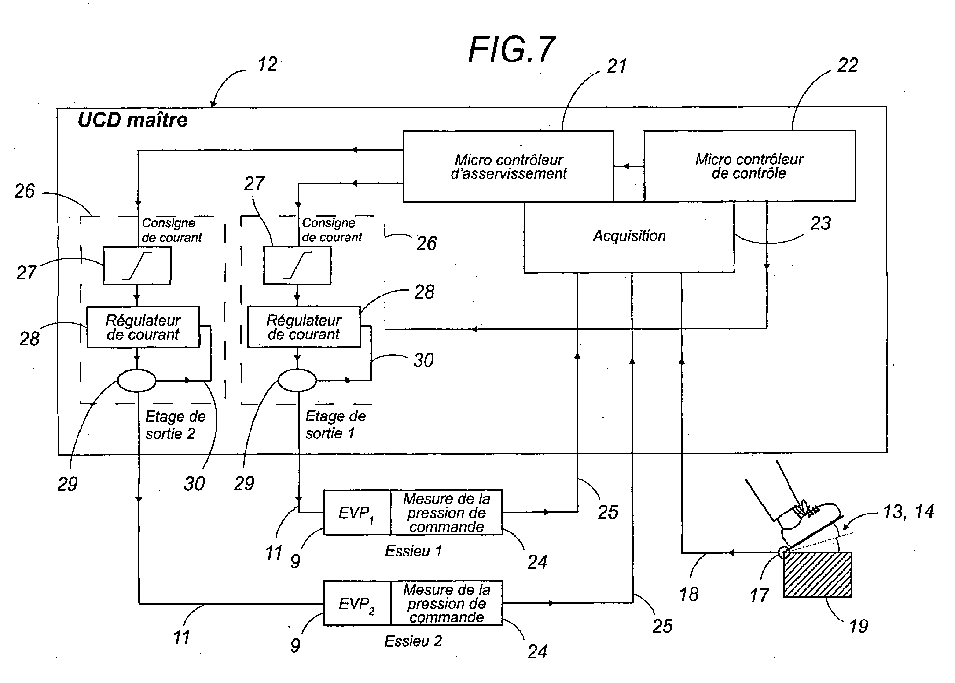

La figure 7 illustre plus complètement cette unité. Elle représente un schéma-bloc d'une unité UCD donnant ses principaux blocs fonctionnels.

Il s'agit d'une unité centrale électronique ayant pour but d'assurer une décélération proportionnelle à la course de la pédale 14, par pilotage des systèmes de freinage électrodynamiques et pneumatiques. Des données fonctionnelles ou dédiées au diagnostic, telles que par exemple la vitesse du véhicule, la pression de commande pneumatique et/ou la pression délivrée par les électrovannes EVP 9 aux actionneurs de frein 7, peuvent avantageusement être échangées avec les différents systèmes de contrôle/commande du véhicule.

Selon le mode de réalisation préférentiel représenté, l'unité UCD 12. comporte deux microprocesseurs : un microcontrôleur d'asservissement 21 qui calcule la ou les commande(s) de freinage électrique à envoyer et un microcontrôleur de contrôle 22 qui, pour des raisons de sécurité, contrôle le bon fonctionnement du microcontrôleur d'asservissement 21.

Ces deux microprocesseurs sont en liaison avec un étage d'acquisition 23, formant l'étage d'entrée de l'unité UCD. L'étage d'acquisition reçoit les signaux correspondant aux valeurs d'entrée de l'UCD et les transforme en signaux électroniques exploitables par les microcontrôleurs.

L'étage d'acquisition 23 reçoit ainsi un signal électrique provenant du ou des capteur(s) de position 17 traduisant la position de la pédale 14. Il peut également recevoir des signaux provenant de boucles d'asservissement et notamment une mesure de la pression, réalisée par un ou plusieurs capteurs 24 placés sur ou après les électrovannes EVP 9, et transmise chacune par une liaison électrique 25.

En fonction des données d'entrée, le microcontrôleur d'asservissement 21 calcule les commandes de freinage à envoyer aux différents modules de freinage 6 et les envoie vers les étages de sortie 26.

Le microcontrôleur de contrôle 22 contrôle et valide ce que fait le microcontrôleur d'asservissement 21. S'il détecte une anomalie ou un dysfonctionnement, il peut agir sur et/ou bloquer un ou plusieurs étages de sortie 26. En outre, il peut demander une réinitialisation et un redémarrage du microcontrôleur d'asservissement 21.

L'unité UCD 12 comporte au moins un étage de sortie 26 et de préférence autant d'étages de sortie 26 qu'il y a de modules de freinage 6 à piloter dans le véhicule, c'est-à-dire autant que d'électrovannes proportionnelles EVP 9 à commander.

Sur l'exemple représenté, il y a deux étages de sortie 26 correspondant à deux électrovannes EVP 9. Cet exemple n'est cependant absolument pas limitatif.

Chacun des étages de sortie 26 est de préférence piloté indépendamment et peut ainsi envoyer une valeur de commande différente à chaque électrovanne EVP 9. On peut ainsi obtenir un freinage différent sur chacun des essieux, ce qui peut être avantageux pour différentes raisons techniques, par exemple lorsque les essieux ne sont pas tous identiques ou ne se comportent pas de la même façon, ou lorsque les organes de freinage présentent un degré d'usure différent selon les essieux.

Une telle indépendance permet également au microcontrôleur d'asservissement 21 de compenser un dysfonctionnement éventuel d'un ou plusieurs modules de freinage 6, en reportant la commande de freinage sur les autres modules, afin de générer malgré tout un freinage global efficace du véhicule.

De préférence, un capteur de pression 24 disposé sur ou après chaque électrovanne EVP 9 renvoie une mesure de la pression vers l'unité UCD, plus particulièrement vers son étage d'acquisition 23, par une ligne électrique 25. On réalise ainsi un asservissement en pression permettant au microcontrôleur d'asservissement 21 de contrôler le freinage réel produit afin de l'ajuster à la valeur de commande demandée, la relation entre courant et pression n'étant pas très stable. Un tel asservissement lui permet également de détecter une éventuelle défaillance au niveau de l'électrovanne EVP 9 ou de son alimentation.

Chaque étage de sortie 26 comporte de préférence un filtre de limitation du jerk 27, limitant les à-coups et permettant d'obtenir en sortie une consigne de courant en pente douce, suivi d'un régulateur de courant 28 produisant le courant demandé afin de générer la commande électrique calculée et l'envoyant sur la ligne de commande électrique 11.

Ce régulateur de courant 28 est préférentiellement suivi d'un capteur de courant 29 de manière à réaliser une boucle d'asservissement en courant 30 pour ajuster le courant produit à la valeur de la consigne.

Le module de base du système de freinage 1 selon l'invention a été représenté schématiquement dans son intégralité sur la figure 1.

Il comprend une pédale 14, son détecteur électronique de position 17, son boîtier pneumatique 19, une ligne de commande pneumatique 10, une unité de commande de la décélération UCD 12, une ligne de commande électrique 11 et une électrovanne proportionnelle EVP 9.

On décrira ci-après le fonctionnement du système de freinage selon l'invention pour ce module de base.

### Régime de freinage de service

Celui-ci existe sur toute la course de confort CC de la pédale 14 correspondant à un enfoncement de la pédale limité au secteur angulaire 15.

Dans ce secteur, le boîtier pneumatique 19 de la pédale n'est pas actif et la ligne de commande pneumatique 10 n'est pas alimentée.

Il parvient à l'unité UCD 12 un signal ou une information provenant du ou des capteurs 17 la renseignant sur le degré d'enfoncement de la pédale 14.

L'UCD commande alors le freinage du véhicule par pilotage électrique du freinage électrodynamique et du freinage électropneumatique.

Pour réaliser le freinage demandé, l'unité UCD 12 privilégie le freinage électrodynamique par les moteurs du véhicule, également appelé frein moteur 31. Ce type de freinage présente l'avantage de ne pas générer d'usure des organes de freinage. En outre, il permet éventuellement de récupérer de l'énergie électrique pouvant être renvoyée dans la caténaire ou utilisée pour recharger des batteries embarquées.

Si le freinage électrodynamique est défaillant ou lorsqu'il se révèle insuffisant ou inadapté, par exemple lorsque la vitesse est trop faible ou dans le cas d'une pente, l'unité UCD 12 le remplace ou préférentiellement le complète par un freinage électropneumatique.

Pour cela, elle pilote l'ouverture de l'électrovanne proportionnelle EVP 9 en lui envoyant une commande électrique par la ligne de commande électrique 11. L'électrovanne proportionnelle EVP 9 délivre alors de l'air sous pression aux actionneurs de frein 7 de manière à compléter le freinage et à obtenir le ralentissement demandé par le conducteur.

L'unité UCD 12 gère automatiquement l'utilisation du frein moteur, du freinage pneumatique ou des deux types de freinage simultanément. Avantageusement, le choix et/ou le dosage se font automatiquement et le système est totalement transparent pour le conducteur.

En outre, l'unité UCD 12 génère un freinage progressif, optimisé pour garantir le confort maximal des passagers. Pour cela, l'unité UCD 12 peut comporter, comme déjà mentionné, des composants de filtrage limitant les à-coups et la pente du freinage demandé, permettant d'obtenir une conduite douce et confortable. Le système de freinage selon l'invention fournit ainsi au chauffeur une véritable assistance à la conduite.

En régime de service, toutes les commandes de freinage sont transmises de manière électrique. Le temps de réponse du système de freinage est donc très court entre l'activation de la pédale 14 et le freinage effectif.

### Régime de freinage d'urqence

Dans les conditions normales d'exploitation du véhicule, c'est-à-dire dans les conditions normales de circulation, de conduite et de fonctionnement, le régime de freinage d'urgence n'est pas utilisé, le chauffeur obtenant la décélération et l'arrêt du véhicule avec le maximum de confort pour les passagers par le freinage de service décrit précédemment.

Cependant, pour des raisons de sécurité, il est nécessaire de prévoir en plus une possibilité supplémentaire de freinage appelée freinage d'urgence. Celui-ci existe sur toute la course de freinage d'urgence CFU succédant à la course de confort CC.

Un tel freinage d'urgence est nécessaire lorsqu'une raison imprévisible oblige le conducteur à demander un freinage plus rapide et plus efficace que le freinage de service, par exemple la présence d'un obstacle imprévu sur la voie, ou une défaillance du système de freinage de service et notamment de l'unité UCD 12.

Pour des raisons d'exploitation, il peut avantageusement être prévu un dispositif d'enregistrement du passage en régime de freinage d'urgence, intervenant dès la fin du régime de freinage de service lors du franchissement du point « dur » correspondant à la zone limite de transition entre les deux étages, symbolisée sur les figures par l'angle τ.

Grâce à cet enregistrement, une analyse des raisons de l'utilisation du freinage d'urgence peut être réalisée a posteriori et une défaillance éventuelle du freinage de service peut être détectée et réparée.

Le régime de freinage d'urgence doit être parfaitement fiable et sécuritaire. Pour cette raison, il utilise le dispositif classique de freinage pneumatique à commande pneumatique qui répond à ces critères. En outre, il doit être rapide et efficace. Le système de freinage selon l'invention permet d'améliorer ces dernières caractéristiques.

Le freinage d'urgence s'étend sur une certaine plage de déviations angulaires de la pédale 14, correspondant ici au secteur angulaire 16.

Sur cette plage, la pédale 14 génère d'une part une commande électrique via l'unité UCD 12 et les liaisons électriques 18 et 11, et d'autre part une commande pneumatique circulant dans la ligne de commande pneumatique 10.

La commande pneumatique, fiable et sécuritaire, déclenche l'ouverture de l'électrovanne proportionnelle EVP 9 et par conséquent la mise en service des actionneurs de frein 7.

Pour des raisons de sécurité, la ligne de commande pneumatique 10 peut être doublée. La commande pneumatique peut alors, par exemple, parvenir à l'électrovanne EVP 9 en passant à travers une valve relais double qui transmet la commande de plus grande intensité.

Afin d'améliorer le temps de réponse du système de freinage d'urgence, une commande électrique, beaucoup plus rapide parvient également à l'unité UCD 12. Celle-ci déclenche immédiatement un freinage électrique par le frein moteur 31 si la situation le permet, et un freinage électropneumatique en envoyant une commande électrique rapide par la ligne de commande électrique 11 à l'électrovanne EVP 9.

L'unité UCD 12 pilote toujours le freinage électrique, tout en maintenant la commande électropneumatique, jusqu'à ce que la valeur de la commande pneumatique remplace progressivement le freinage électrodynamique.

Même dans cette course d'urgence CFU, l'unité UCD 12 participe au dosage du freinage et ajoute selon une loi interne une valeur de commande électrique en fonction de la pression finale de freinage à obtenir et compte tenu de la commande de pression pneumatique de freinage parvenue à l'électrovanne proportionnelle EVP 9. Cependant et en aucun cas, l'unité UCD 12 ne peut, via la ligne de commande électrique 11, réduire le freinage commandé par la ligne de commande pneumatique 10.

La superposition et la conjugaison de ces deux commandes dans l'électrovanne EVP 9 permet un freinage progressif, quasi-immédiat et d'efficacité optimale.

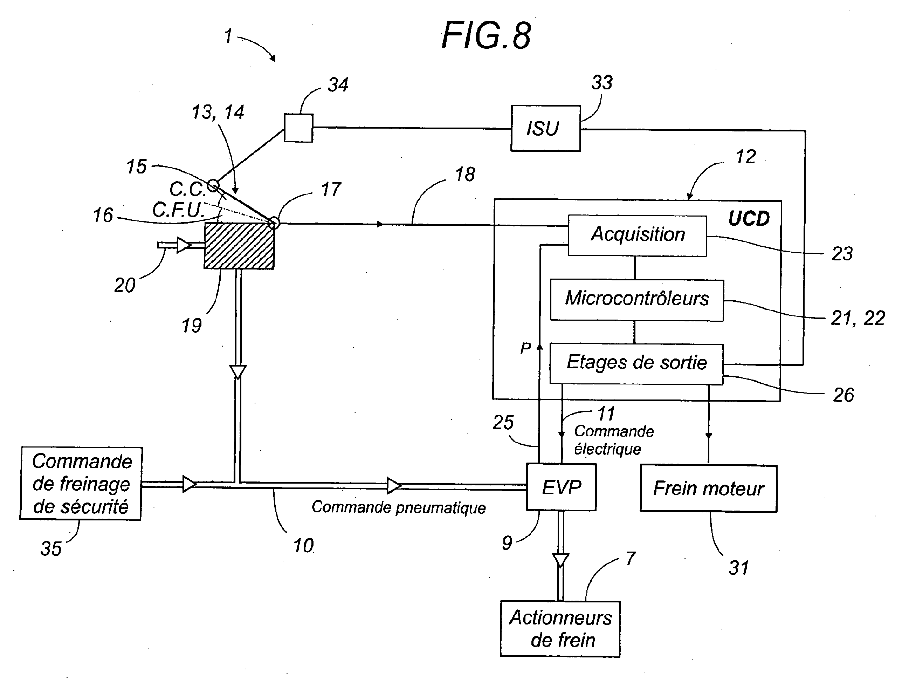

Afin d'améliorer la fiabilité du système de freinage selon l'invention, il est possible d'y ajouter un dispositif supplémentaire de sécurité, qui a été représenté schématiquement sur la figure 8 et qui permet de bloquer, dans certaines situations, au moins une sortie de l'unité de commande de la décélération 12 à l'aide d'un moyen appelé inhibiteur de sortie d'UCD ou ISU 33.

Comme on l'a indiqué précédemment l'unité UCD est une unité électronique entièrement gérée par des logiciels. Par nature, elle ne peut donc pas être parfaitement sécuritaire, malgré les précautions prises comme par exemple l'utilisation du microcontrôleur de contrôle 22.

En cas de dysfonctionnement éventuel, l'unité UCD 12 pourrait générer des consignes de freinage non souhaitées et provoquer ainsi un freinage intempestif pouvant se révéler dangereux.

En effet, si l'unité de commande de la décélération 12 génère une importante consigne de freinage non demandée, elle peut causer un ralentissement brutal du véhicule très inconfortable pour les passagers et pouvant même entraîner un risque de chute ou de blessure.

D'autre part, si l'unité UCD 12 génère une consigne de freinage de faible intensité mais de longue durée, elle peut provoquer un freinage peu important passant inaperçu pour le chauffeur. Par son caractère continu, un tel freinage est susceptible de provoquer un échauffement des organes de freinage pouvant être à l'origine d'un début d'incendie.

Avantageusement, l'inhibiteur de sortie d'UCD 33 permet de couper l'alimentation d'un ou plusieurs étages de sortie 26 de l'unité UCD 12. Ainsi en cas de défaillance de l'unité UCD 12, même si les microcontrôleurs 21 et 22 génèrent des consignes intempestives de freinage, celles-ci ne sont pas traduites en commandes électriques de freinage envoyées vers l'électrovanne EVP 9 via la ligne de commande électrique 11.

Pour cela, ce système supplémentaire de sécurité comporte un capteur 34 qui détecte si le conducteur actionne ou non l'organe manuel 13, préférentiellement la pédale 14.

Le capteur 14 réalise également une fonction d'interrupteur électrique qui présente deux états selon la position détectée de l'organe manuel 13.

Le premier état de l'interrupteur correspond à la position de repos de l'organe manuel 13, c'est-à-dire la position dans laquelle se trouve l'organe manuel 13 lorsque le conducteur du véhicule ne demande aucun freinage.

Dès que l'organe manuel 13 quitte sa position de repos, l'interrupteur bascule dans son deuxième état. Ce deuxième état correspond à une position active de l'organe manuel 13 par laquelle le conducteur demande un freinage et ce, quelle que soit l'intensité du freinage demandé.

Ce capteur 34 est relié à l'inhibiteur de sortie d'UCD ou ISU 33 et lui transmet par son état électrique une information sur la position de l'organe manuel 13.

Selon l'état dans lequel se trouve l'interrupteur, l'inhibiteur de sortie d'UCD ou ISU 33 coupe ou autorise l'alimentation électrique des étages de sortie 26 de l'unité UCD 12.

Tant que l'interrupteur se trouve dans son premier état correspondant à la position de repos de l'organe manuel 13, l'ISU 33 empêche l'alimentation des étages de sortie 26 de l'UCD 12. Ainsi, et même si les microcontrôleurs génèrent des consignes indésirables du fait d'un disfonctionnement de l'unité UCD 12, aucune commande électrique de freinage ne peut parvenir à l'électrovanne EVP 9 en l'absence de demande de freinage de la part du conducteur.

Le système de freinage selon l'invention est ainsi parfaitement sécuritaire.

Lorsque le conducteur actionne l'organe manuel 13 pour demander du freinage, l'interrupteur du capteur 34 passe dans son deuxième état et l'ISU 33 rétablit l'alimentation des étages de sortie 26 de l'unité UCD 12. L'unité UCD 12 peut alors envoyer à l'électrovanne EVP 11 une commande électrique de freinage adaptée selon le principe décrit précédemment.

De préférence, l'inhibiteur de sortie d'UCD 33 rétablit également l'alimentation des étages de sortie 26 de l'unité UCD 12 lorsque le véhicule est à l'arrêt.

Plusieurs variantes de ce dispositif peuvent être facilement imaginées.

Par exemple, le capteur 34 peut être indépendant ou confondu avec le capteur de position 17 de l'organe manuel 13 servant à transmettre à l'étage d'acquisition 23 de l'unité UCD 12, via la ligne 18, une information sur la position de l'organe manuel 13.

Selon une autre variante envisageable, la fonction d'interrupteur peut être dissociée du capteur 34. Dans ce cas un interrupteur indépendant doit être ajouté.

Le capteur 34 peut d'autre part être indépendant ou intégré à l'inhibiteur de sortie d'UCD 33. De même, l'ISU 33 peut être séparé de ou intégré à l'unité UCD 12.

Selon un autre mode préférentiel de réalisation de l'invention, l'inhibiteur de sortie UCD 33 peut avantageusement ne contrôler que l'alimentation des étages de sortie 26 de l'unité UCD 12 reliés à ou aux électrovanne(s) EVP 9 et non de l'étage de sortie pilotant le frein moteur 31.

Ainsi, l'ISU 33 bloque les freinages pouvant être dangereux et non le freinage électrodynamique sans danger du frein moteur 31. Il est ainsi possible de conserver des fonctions de freinage automatique par frein moteur, comme par exemple un freinage automatique avant les virages si la vitesse du véhicule est trop élevée.

Ces fonctions non demandées par le conducteur doivent se produire même si l'organe manuel 13 se trouve en position de repos et donc lorsque l'ISU 33 coupe l'alimentation des étages de sorties 26 de l'unité UCD 12 reliés aux électrovannes EVP 9.

En plus de la position de l'organe manuel 13, d'autres conditions peuvent préférentiellement activer l'inhibiteur de sortie UCD 33 et par là provoquer l'alimentation ou la mise hors tension d'un ou plusieurs des étages de sortie 26 de l'unité UCD 12.

L'une de ces conditions est notamment l'existence d'une commande de freinage de sécurité 35. Dans certaines circonstances, par exemple en cas d'ouverture de l'une des portes du véhicule, de décollement du système de guidage, de malaise du conducteur ou de déclenchement manuel du dispositif d'arrêt d'urgence, une commande de freinage de sécurité 35 est envoyée au système de freinages du véhicule. Le freinage résultant doit être parfaitement fiable et on utilise dans ce but une commande pneumatique de freinage.

Pour augmenter encore la fiabilité du système, le dispositif ISU 33 coupe de préférence l'alimentation des étages de sortie 26 de l'unité UCD 12 lorsqu'un freinage de sécurité est demandé, afin de ne laisser fonctionner que le dispositif parfaitement fiable de freinage pneumatique à commande pneumatique, garantissant ainsi le niveau maximal de sécurité requis.

L'homme du métier pourra imaginer d'autres variantes de ce dispositif de sécurité et notamment par exemple un dispositif ISU 33 contrôlant l'alimentation de l'unité UCD 12 dans son ensemble et non plus uniquement d'un ou de plusieurs de ses étages de sortie 26.

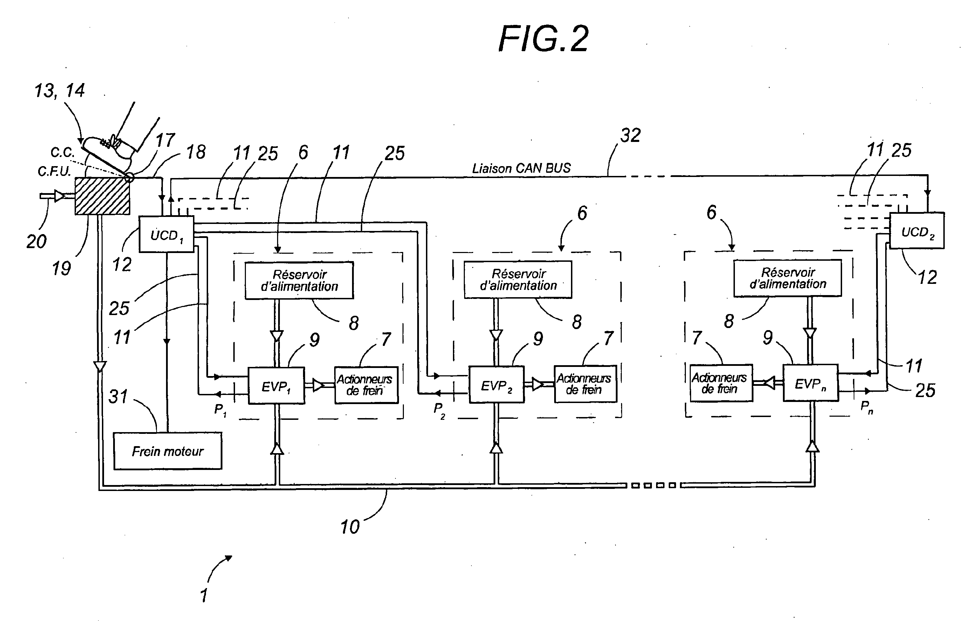

Le système de freinage selon l'invention peut être avantageusement appliqué à un véhicule à plusieurs essieux, par exemple une rame 2 routière et multi-essieux de transport en commun, comme illustré à titre d'exemple sur les figures 2 à 4.

Le système de freinage selon l'invention comprend alors plusieurs modules de freinage 6, de préférence un par essieu, comportant chacun une électrovanne proportionnelle EVP 9 reliée à un réservoir d'alimentation 8, commun ou indépendant, et des actionneurs de frein 7.

L'électrovanne EVP 9 de chacun de ces modules de freinage 6 est reliée pneumatiquement au boîtier pneumatique 19 de la pédale 14 par une ligne de commande pneumatique 10 unique ou pouvant être doublée et dans ce cas comportant préférentiellement au moins une valve relais double.

Elle est également reliée électriquement à une unité UCD 12 par une ligne de commande électrique 11 spécifique à chaque électrovanne EVP 9. Chaque électrovanne EVP 9 est préférentiellement reliée à l'unité UCD 12 par une autre liaison électrique 25 spécifique permettant de réaliser l'asservissement en pression décrit précédemment.

Le fonctionnement de ces modules de freinage 6 est semblable à celui du module de base décrit en détail ci-dessus, l'unité UCD 12 pouvant en outre gérer indépendamment le fonctionnement de chacun de ces modules 6 pour obtenir le comportement global de freinage le plus adapté et le plus efficace.

Lorsque le véhicule est long et comporte de nombreux modules de freinage 6, la commande pneumatique requiert un temps relativement long pour se propager le long de la ligne de commande pneumatique 10 d'un bout à l'autre du véhicule. Le problème du temps de réponse devient alors crucial.

En apportant une réponse satisfaisant à ce problème, le système de freinage selon l'invention devient particulièrement avantageux dans de telles applications. En effet, l'unité UCD 12 envoie une commande électrique à propagation rapide, à toutes les électrovannes proportionnelles EVP 9 qui agissent toutes en même temps et beaucoup plus vite que par la commande pneumatique. La commande pneumatique s'ajoute progressivement à la commande électrique au fur et à mesure de son arrivée. L'efficacité du freinage s'en trouve grandement améliorée et l'usure des organes de freinage mieux répartie.

Pour limiter le nombre de liaisons électriques partant et aboutissant à l'unité UCD 12, on peut avantageusement utiliser plusieurs unités UCD 12, référencées UCD₁, UCD₂ ..., réparties le long de la rame 2. En effet, une liaison électrique double 11 et 25 doit exister entre l'unité UCD 12 et chaque électrovanne proportionnelle EVP 9. Ces unités de commande de la décélération UCD s.ont de préférence reliées entre elles par une liaison BUS 32, par exemple fonctionnant selon le protocole CAN.

On utilise ainsi préférentiellement deux unités UCD 12 placées une à chaque extrémité du véhicule. L'unité UCD₁ située en tête de la rame 2, reçoit les données de la pédale 14 et sert de préférence d'unité maître. Elle pilote directement la première moitié des modules de freinage 6, située vers l'avant du véhicule.

La deuxième unité UCD₂ est une unité esclave qui reçoit ses instructions de l'unité UCD₁ maître de préférence au moyen d'une liaison BUS 32, par exemple fonctionnant selon le protocole CAN. Elle pilote ensuite la deuxième moitié des modules de freinage 6, située à l'arrière du véhicule.

La répartition des modules de freinage 6 entre les unités UCD 12 peut néanmoins être différente en fonction des diverses contraintes techniques propres à chaque application.

Les rames de transport en commun comportent souvent un module de tête 3 à chacune de leurs extrémités pour pouvoir circuler dans les deux sens sans avoir à faire demi-tour. Ces modules de tête 3 comportent chacun un poste de conduite avec une pédale de frein 14.

Comme représenté sur la figure 3, le système de freinage selon l'invention peut alors avantageusement comporter une unité UCD 12 dans chaque module de tête recevant les données de la pédale 14 concernée et reliée à l'autre unité UCD préférentiellement par une liaison BUS 32, par exemple fonctionnant selon le protocole CAN.

Dans ce cas, les deux unités UCD 12 sont identiques et peuvent jouer alternativement l'une pour l'autre le rôle de maître ou d'esclave en fonction du poste de conduite utilisé.

Les exemples représentés comportent deux unités UCD, mais on peut envisager le cas d'une seule unité, de trois unités ou plus.

Selon un mode de réalisation préférentiel de l'invention, l'une de ces unités de commande de la décélération UCD 12 reçoit l'information sur la position de l'organe manuel 13 et sert d'unité maître pour les autres unités UCD 12 qui sont esclaves.

Ainsi, il est par exemple envisageable d'utiliser une unité UCD simplifiée par module de freinage 6 et donc par essieu, ces micro-unités UCD esclaves servant d'interface entre une unité UCD 12 maître recevant les données concernant la position de l'organe manuel 13, et chacune des électrovannes proportionnelles EVP 9.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir du cadre de l'invention définie par les revendications.

## Revendications

1. Système de freinage à commande électropneumatique pour véhicule routier multi-essieux, comportant pour chaque essieu un module de freinage pneumatique (6), relié à un réservoir d'alimentation (8) en gaz d'actionnement des freins et comprenant des organes actionneurs de frein (7), le système de freinage **caractérisé en ce qu'**il comprend :
- un organe manuel (13) à deux étages de fonctionnement correspondant à un régime de service et à un régime de freinage d'urgence, actionné par le conducteur du véhicule pour initier la procédure de freinage et dont la position détermine l'intensité du freinage demandé ;
- une électrovanne proportionnelle EVP (9) pour chaque module de freinage (6), recevant lorsque l'organe manuel (13) est actionné une commande électrique et/ou une commande pneumatique de freinage, et dont l'ouverture, proportionnelle à la ou aux commande(s) reçue(s), met en communication les organes actionneurs de frein (7) avec le réservoir d'alimentation (8) de manière à générer l'effort de freinage demandé ;
- au moins une unité de commande de la décélération UCD (12) recevant une information sur la position de l'organe manuel (13) et générant à partir de cette position, lorsque l'organe manuel (13) est actionné, une commande électrique de freinage destinée à piloter électriquement l'ouverture des électrovannes EVP (9) ;
- une ligne de commande électrique (11) pour chaque module de freinage (6), formant une liaison électrique entre l'unité UCD (12) et chacune des électrovannes EVP (9) et permettant la transmission de la commande électrique ;
- une ligne de commande pneumatique (10) formant une liaison pneumatique entre l'organe manuel (13) et les électrovannes EVP (9) et permettant la transmission d'une commande pneumatique générée par l'organe manuel (13), uniquement en régime de freinage d'urgence.

2. Système de freinage à commande électropneumatique selon la revendication précédente **caractérisé en ce que** l'unité UCD (12) pilote également le freinage électrodynamique par les moteurs du véhicule, également appelé frein moteur (31).

3. Système de freinage à commande électropneumatique selon l'une quelconque des revendications précédentes **caractérisé en ce que** l'organe manuel (13) à deux étages est une pédale de frein (14) et **en ce que** ses deux étages de fonctionnement correspondent à deux secteurs angulaires successifs (15, 16) d'enfoncement de la pédale (14).

4. Système de freinage à commande électropneumatique selon la revendication 3 **caractérisé en ce que** les deux étages de fonctionnement de la pédale (14) sont indiqués au conducteur par une différence de raideur de la pédale.

5. Système de freinage à commande électropneumatique selon l'une quelconque des revendications précédentes **caractérisé en ce qu'**il comporte en outre au moins un capteur de position (17) détectant la position de l'organe manuel (13) et transmettant à l'unité UCD (12) une information relative à cette position.

6. Système de freinage à commande électropneumatique selon l'une quelconque des revendications précédentes **caractérisé en ce que** l'un au moins des modules de freinage (6) comporte en outre une unité de contrôle et de stabilisation du freinage.

7. Système de freinage à commande électropneumatique selon l'une quelconque des revendications précédentes **caractérisé en ce qu'**il comporte en outre au moins un capteur de pression (24) placé sur ou après chaque électrovanne EVP (9) renvoyant une mesure de la pression vers l'unité UCD (12) par une ligne électrique (25) de manière à réaliser un asservissement en pression.

8. Système de freinage à commande électropneumatique selon l'une quelconque des revendications précédentes **caractérisé en ce que** l'unité UCD (12) comporte :
- un étage d'acquisition (23), formant l'étage d'entrée de l'unité UCD et recevant l'information sur la position de l'organe manuel (13) ;
- un microcontrôleur d'asservissement (21) qui calcule la commande de freinage électrique à envoyer ;
- un microcontrôleur de contrôle (22) qui contrôle le microcontrôleur d'asservissement (21) ; et
- au moins un étage de sortie (26) qui comporte un régulateur de courant (28) produisant la commande électrique calculée et l'envoyant sur la ligne de commande électrique (11).

9. Système de freinage à commande électropneumatique selon la revendication précédente **caractérisé en ce que** l'étage de sortie (26) comporte en outre un filtre de limitation du jerk (27) et un capteur de courant (29) placé après le régulateur de courant (28) de manière à réaliser une boucle d'asservissement en courant (30).

10. Système de freinage à commande électropneumatique selon la revendication 8 ou 9 **caractérisé en ce que** l'unité UCD (12) comporte autant d'étages de sortie (26) qu'elle a de modules de freinage (6) à piloter, chacun de ces étages de sortie (26) étant piloté indépendamment.

11. Système de freinage à commande électropneumatique selon l'une quelconque des revendications précédentes **caractérisé en ce qu'**il comporte en outre un inhibiteur de sortie d'UCD ISU (33) permettant de bloquer au moins une sortie de l'unité de commande de la décélération UCD (12) lorsque l'organe manuel (13) est en position de repos et/ou en cas de commande de freinage de sécurité (35).

12. Système de freinage à commande électropneumatique selon les revendications 2 et 11 **caractérisé en ce que** l'inhibiteur de sortie d'UCD ISU (33) ne bloque pas le frein moteur (31) piloté par l'unité UCD (12).

13. Système de freinage à commande électropneumatique selon la revendication 11 ou 12 **caractérisé en ce qu'**il comporte en outre un capteur (34) détectant si l'organe manuel (13) est en position active ou en position de repos et réalisant une fonction d'interrupteur électrique à deux états selon que l'organe manuel (13) est en position active ou en position de repos.

14. Système de freinage à commande électropneumatique selon l'une quelconque des revendications précédentes **caractérisé en ce qu'**il comporte au moins deux unités de commande de la décélération UCD (12) reliées entre elles par une liaison BUS (32) et **en ce que** l'une de ces unités de commande de la décélération UCD (12) reçoit l'information sur la position de l'organe manuel (13) et sert d'unité maître pour les autres unités UCD (12) qui sont esclaves.

15. Système de freinage à commande électropneumatique selon la revendication 14 **caractérisé en ce qu'**il comporte une unité de commande de la décélération UCD (12) à chacune des extrémités du véhicule, servant alternativement d'unité maître ou d'unité esclave selon le sens de circulation du véhicule.

16. Système de freinage à commande électropneumatique selon la revendication 14 **caractérisé en ce qu'**il comporte une unité de commande de la décélération UCD (12) maître, recevant l'information sur la position de l'organe manuel (13) et une unité UCD esclave simplifiée par module de freinage (6) servant d'interface entre l'unité UCD maître et chacune des électrovannes proportionnelles EVP (9).

17. Système de freinage à commande électropneumatique selon l'une quelconque des revendications précédentes **caractérisé en ce que** la ligne de commande pneumatique (10) est doublée et comporte au moins une valve relais double.

18. Système de freinage à commande électropneumatique selon l'une quelconque des revendications précédentes **caractérisé en ce qu'**il est destiné à une rame multi-essieux de transport en commun, sur pneus et autoguidée.

## Patentansprüche

1. Elektropneumatisch gesteuertes Bremssystem für mehrachsiges Straßenfahrzeug, mit für jede Achse ein pneumatisches Bremsmodul (6), das an einem Versorgungstank (8) für das Bremsbetätigungsgas angeschlossen ist, und mit Bremsbetätigungsorganen (7), wobei das Bremssystem **dadurch gekennzeichnet ist, dass** es umfasst:
- ein manuelles Organ (13) mit zwei Betriebsstufen, einem Normalbetrieb und einem Notbremsbetrieb, das vom Fahrer des Fahrzeugs betätigt wird, um das Bremsverfahren einzuleiten, und dessen Position die gewünschte Bremsstärke bestimmt;
- ein Proportionalmagnetventil EVP (9) für jedes Bremsmodul (6), das bei Betätigung des manuellen Organs (13) einen elektrischen und/oder pneumatischen Steuerbefehl erhält, und dessen zum/zu den erhaltenen Befehl(en) proportionale Öffnung die Bremsbetätigungsorgane (7) mit dem Versorgungstank (8) verbindet, um damit die gewünschte Bremskraft zu erzeugen;
- mindestens eine Steuereinheit der Verlangsamung UCD (12), die eine Information über die Position des manuellen Organs (13) erhält und ab dieser Position, wenn das manuelle Organ (13) betätigt wird, einen elektrischen Bremsbefehl erzeugt, der das Öffnen der Magnetventile EVP (9) elektrisch steuern soll;
- eine elektrische Steuerleitung (11) für jedes Bremsmodul (6), die eine elektrische Verbindung zwischen der Einheit UCD (12) und jedem der Magnetventile EVP (9) herstellt und die Übertragung des elektrischen Befehls ermöglicht;
- eine pneumatische Steuerleitung (10), die zwischen dem manuellen Organ (13) und den Magnetventilen EVP (9) eine pneumatische Verbindung herstellt und die Übertragung eines pneumatischen Befehls ermöglicht, der vom manuellen Organ (13) erzeugt wurde, nur im Notbremsbetrieb.

2. Elektropneumatisch gesteuertes Bremssystem gemäß dem vorherigen Anspruch, **dadurch gekennzeichnet, dass** die Einheit UCD (12) ebenfalls die elektrodynamische Bremsung über die Motoren des Fahrzeugs, ebenfalls Motorbremse (31) genannt, steuert.

3. Elektropneumatisch gesteuertes Bremssystem gemäß einem der vorherigen Ansprüche, **dadurch gekennzeichnet, dass** das manuelle Organ (13) mit zwei Stufen ein Bremspedal (14) ist, und dass seine beiden Betriebsstufen zwei aufeinanderfolgenden winkelförmigen Drücksektoren (15, 16) des Pedals (14) entsprechen.

4. Elektropneumatisch gesteuertes Bremssystem gemäß Anspruch 3, **dadurch gekennzeichnet, dass** die beiden Betriebsstufen des Pedals (14) dem Fahrer über eine Steifheitsdifferenz des Pedals angezeigt werden.

5. Elektropneumatisch gesteuertes Bremssystem gemäß einem der vorherigen Ansprüche, **dadurch gekennzeichnet, dass** es ferner mindestens einen Positionssensor (17) umfasst, der die Position des manuellen Organs (13) erfasst und eine Information bezüglich dieser Position an die Einheit UCD (12) überträgt.

6. Elektropneumatisch gesteuertes Bremssystem gemäß einem der vorherigen Ansprüche, **dadurch gekennzeichnet, dass** mindestens eines der Bremsmodule (6) ferner eine Kontroll- und Stabilisierungseinheit der Bremsung umfasst.

7. Elektropneumatisch gesteuertes Bremssystem gemäß einem der vorherigen Ansprüche, **dadurch gekennzeichnet, dass** es ferner mindestens einen Drucksensor (24) umfasst, der am oder hinter jedem Magnetventil EVP (9) angeordnet ist und über eine elektrische Leitung (25) eine Messung des Drucks an die Einheit UCD (12) schickt, um eine Druckregelung herzustellen.

8. Elektropneumatisch gesteuertes Bremssystem gemäß einem der vorherigen Ansprüche, **dadurch gekennzeichnet, dass** die Einheit UCD (12) folgendes umfasst:
- eine Erfassungsstufe (23), die die Eingangsstufe der Einheit UCD bildet und die Information über die Position des manuellen Organs (13) erhält;
- einen Regelungs-Mikrocontroller (21), der den zu versendenden elektrischen Bremsbefehl errechnet;
- einen Kontroll-Mikrocontroller (22), der den Regelungs-Mikrocontroller (21) kontrolliert; und
- mindestens eine Ausgangsstufe (26), die einen Stromregler (28) umfasst, der den errechneten elektrischen Befehl erzeugt und ihn in die elektrische Steuerleitung (11) schickt.

9. Elektropneumatisch gesteuertes Bremssystem gemäß dem vorherigen Anspruch, **dadurch gekennzeichnet, dass** die Ausgangsstufe (26) ferner einen Jerk-Begrenzungsfilter (27) und einen Stromsensor (29) umfasst, der hinter dem Stromregler (28) angeordnet ist, um eine Stromregelungsschleife (30) herzustellen.

10. Elektropneumatisch gesteuertes Bremssystem gemäß Anspruch 8 oder 9, **dadurch gekennzeichnet, dass** die Einheit UCD (12) so viele Ausgangsstufen (26) aufweist wie sie zu steuernde Bremsmodule (6) hat, wobei jede dieser Ausgangsstufen (26) unabhängig gesteuert wird.

11. Elektropneumatisch gesteuertes Bremssystem gemäß einem der vorherigen Ansprüche, **dadurch gekennzeichnet, dass** es ferner einen UCD-Ausgangshemmer ISU (33) umfasst, der mindestens einen Ausgang der Steuereinheit der Verlangsamung UCD (12) sperren kann, wenn sich das manuelle Organ (13) in Ruhestellung befindet und/oder im Fall eines Sicherheitsbremsbefehls (35).

12. Elektropneumatisch gesteuertes Bremssystem gemäß den Ansprüchen 2 und 11, **dadurch gekennzeichnet, dass** der UCD-Ausgangshemmer ISU (33) nicht die von der Einheit UCD (12) gesteuerte Motorbremse (31) sperrt.

13. Elektropneumatisch gesteuertes Bremssystem gemäß Anspruch 11 oder 12, **dadurch gekennzeichnet, dass** es ferner einen Sensor (34) umfasst, der erfasst, ob sich das manuelle Organ (13) in aktiver Position oder in Ruheposition befindet, und der wie ein elektrischen Schalter mit zwei Stufen funktioniert, je nachdem, ob das manuelle Organ (13) in aktiver Position oder in Ruheposition ist.

14. Elektropneumatisch gesteuertes Bremssystem gemäß einem der vorherigen Ansprüche, **dadurch gekennzeichnet, dass** es mindestens zwei Steuereinheiten der Verlangsamung UCD (12) umfasst, die über eine BUS-Verbindung (32) miteinander verbunden sind, und dass eine dieser Steuereinheiten der Verlangsamung UCD (12) die Information über die Position des manuellen Organs (13) erhält und als Master-Einheit für die anderen Einheiten UCD (12) dient, die Slaves sind.

15. Elektropneumatisch gesteuertes Bremssystem gemäß Anspruch 14, **dadurch gekennzeichnet, dass** es eine Steuereinheit der Verlangsamung UCD (12) an jedem Ende des Fahrzeugs aufweist, die abwechselnd als Master- und Slave-Einheit dienen, je nach Fahrtrichtung des Fahrzeugs.

16. Elektropneumatisch gesteuertes Bremssystem gemäß Anspruch 14, **dadurch gekennzeichnet, dass** es eine Master-Steuereinheit der Verlangsamung UCD (12) umfasst, die die Information über die Position des manuellen Organs (13) erhält, und eine Slave-Einheit UCD, vereinfacht durch Bremsmodul (6), die als Schnittstelle zwischen der Master-Einheit UCD und jedem der Proportionalmagnetventile EVP (9) dient.

17. Elektropneumatisch gesteuertes Bremssystem gemäß einem der vorherigen Ansprüche, **dadurch gekennzeichnet, dass** die pneumatische Steuerleitung (10) verdoppelt ist und mindestens ein doppeltes Relaisventil umfasst.

18. Elektropneumatisch gesteuertes Bremssystem gemäß einem der vorherigen Ansprüche, **dadurch gekennzeichnet, dass** es für ein mehrachsiges öffentliches Verkehrsmittel, auf Rädern und selbstgelenkt, bestimmt ist.

## Claims

1. Electropneumatically-controlled braking system for multiple-axle road vehicle, comprising - for each axle - one pneumatic braking module (6), connected to a gas supply tank (8) to actuate the brakes, and comprising brake actuator units (7), with the braking system being **characterized in that** it includes:
- a manual unit (13) with two operating stages, corresponding to a service regime and an emergency braking regime, actuated by the vehicle driver to initiate the braking procedure, and of which the position governs the demanded intensity of braking;
- a proportional electrovalve (EVP) (9) for each braking module (6), that - when the manual unit (13) is actuated - receives an electrical command and/or a pneumatic command for braking, and of which the opening in proportion to the command(s) received puts the brake actuator units (7) in communication with the gas supply tank (8) so as to generate the demanded braking force;
- at least one deceleration control unit (UCD) (12) receiving a signal concerning the position of the manual unit (13) and, when the manual unit (13) is actuated, using this position to generate an electrical braking command intended to electrically pilot the opening of the EVP electrovalves (9);
- an electrical control line (11) for each braking module (6), comprising an electrical link between the UCD unit (12) and each of the EVP electrovalves (9) and permitting transmission of the electrical command;
- a pneumatic control line (10) forming a pneumatic link between the manual unit (13) and the EVP electrovalves (9) and permitting the transmission of a pneumatic command generated by the manual unit (13), in emergency braking regime only.

2. Electropneumatically-controlled braking system according to the preceding claim, **characterized in that** the UCD unit (12) also pilots the electrodynamic braking by the vehicle motors/engines, also called motor/engine braking (31).

3. Electropneumatically-controlled braking system according to any of the preceding claims, **characterized in that** the two-stage manual unit (13) is a brake pedal (14), and by the fact that its two operating stages correspond to two angular sectors (15, 16) of depression of the pedal (14).

4. Electropneumatically-controlled braking system according to claim 3, **characterized in that** the two stages of operation of the pedal (14) are indicated to the driver by a difference in stiffness of the pedal.

5. Electropneumatically-controlled braking system according to any of the preceding claims, **characterized in that** it also includes at least one position sensor (17) detecting the position of the manual unit (13) and sending the UCD unit (12) a signal pertaining to this position.

6. Electropneumatically-controlled braking system according to any of the preceding claims, **characterized in that** at least one of the braking modules (6) also includes a braking control and stabilization unit.

7. Electropneumatically-controlled braking system according to any of the preceding claims, **characterized in that** it also includes at least one pressure sensor (24) positioned on or after each EVP electrovalve (9), sending back a measurement of the pressure to a UCD unit (12) via an electrical line (25), so as to implement a servocontrol interlinked with pressure.

8. Electropneumatically-controlled braking system according to any of the preceding claims, **characterized in that** the UCD unit (12) includes:
- an acquisition stage (23) forming the entry stage of the UCD unit and receiving the information about the position of the manual unit (13);
- a servocontrol microcontroller (21) that calculates the electrical braking command to be sent;
- a control microcontroller (22) that controls the servocontrol microcontroller (21); and
- at least one output stage (26) that includes a current regulator (28) producing the calculated electrical command and sending it on the electrical control line (11).

9. Electropneumatically-controlled braking system according to the preceding claim, **characterized in that** the output stage (26) also includes a jerk limitation filter (27) and a current sensor (29) positioned after the current regulator (28), so as to implement a current servocontrol circuit (30).

10. Electropneumatically-controlled braking system according to claims 8 or 9, **characterized in that** the UCD unit (12) includes one output stage (26) for each braking module (6) to be piloted, with each of these output stages (26) being piloted independently.

11. Electropneumatically-controlled braking system according to any of the preceding claims, **characterized in that** it also includes an UCD output inhibitor (ISU) (33), allowing blocking of at least one UCD deceleration control unit (12) when the manual unit (13) is in idle position, and/or in case of safety braking command (35).

12. Electropneumatically-controlled braking system according to claims 2 and 11, **characterized in that** the ISU UCD output inhibitor (33) does not block the motor brake (31) piloted by the UCD unit (12).

13. Electropneumatically-controlled braking system according to claims 11 or 12, **characterized in that** it also includes a sensor (34) detecting whether the manual unit (13) is in the active position or in the idle position, and implementing the function of an electrical switch with two states, depending on whether the manual unit (13) is in the active position or the idle position.

14. Electropneumatically-controlled braking system according to any of the preceding claims, **characterized in that** it includes at least two UCD deceleration control units (12) interconnected via a BUS link (32), and by the fact that one of these UCD deceleration control units (12) receives the signal reporting the position of the manual unit (13), and acts as a master unit for the other UCD units (12), which are slaves.

15. Electropneumatically-controlled braking system according to claim 14, **characterized in that** it includes a UCD deceleration control unit (12) at each end of the vehicle, acting alternately as a master unit or slave unit, according to the vehicle's direction of travel.

16. Electropneumatically-controlled braking system according to claim 14, **characterized in that** it includes a master UCD deceleration control unit (12) receiving the signal indicating the position of the manual unit (13), and one simplified slave UCD unit per braking module (6) acting as an interface between the master UCD unit and each of the EVP proportional electrovalves (9).

17. Electropneumatically-controlled braking system according to any of the preceding claims, **characterized in that** the pneumatic control line (10) is duplicated and includes at least one double relay valve.

18. Electropneumatically-controlled braking system according to any of the preceding claims, **characterized in that** it is intended for a public transport multiple-axle train set that has tires and is self-guided.
